# EUROPÄISCHE PATENTSCHRIFT

(11) **EP 0 726 825 B1**
(45) Veröffentlichungstag und Bekanntmachung des Hinweises auf die Patenterteilung: **03.06.1998**
(21) Anmeldenummer: 94931548.5
(22) Anmeldetag: 25.10.1994
(51) Int. Cl.: B21D 53/84, F16C 7/02, F16C 7/00

(54) **VERFAHREN ZUR HERSTELLUNG EINES PLEUELS AUS BLECH**
PROCESS FOR MANUFACTURING A CONNECTING ROD MADE OF SHEET METAL
PROCEDE DE FABRICATION D'UNE BIELLE EN TOLE

(30) Priorität: 01.11.1993 DE 4337127; 08.01.1994 DE 4400386; 10.06.1994 DE 4420265
(43) Veröffentlichungstag der Anmeldung: 21.08.1996
(73) Patentinhaber: GRIWE Innovative Umformtechnik GmbH, D-56457 Westerburg (DE); EDELSTAHLWERKE BUDERUS AG, D-35576 Wetzlar (DE)
(72) Erfinder: FATEHPOUR, Edison, D-56068 Koblenz (DE); GRIMM, Walter, D-35606 Solms (DE); KOCH, Berthold, D-56414 Herschbach (DE)
(74) Vertreter: Jochem, Bernd, Dipl.-Wirtsch.-Ing.
(86) Internationale Anmeldenummer: EP9403502
(87) Internationale Veröffentlichungsnummer: WO9512467

(56) Entgegenhaltungen:
- DE-A- 3 006 240
- DE-A- 3 801 802
- PATENT ABSTRACTS OF JAPAN vol. 7, no. 16 (M-187) 22. Januar 1983 & JP,A,57 173 610 (WATANABE TSUYOSHI) 26. Oktober 1982
- PATENT ABSTRACTS OF JAPAN vol. 6, no. 93 (M-133) 29. Mai 1982 & JP,A,57 029 808 (TOYOTA MOTOR CMP) 17. Februar 1982
- PATENT ABSTRACTS OF JAPAN vol. 9, no. 290 (M-430) 16. November 1985 & JP,A,60 130 442 (TSUZUKI YOSHIHIKO) 11. Juli 1985
- PATENT ABSTRACTS OF JAPAN vol. 10, no. 134 (M-479) 17. Mai 1986 & JP,A,60 257 939 (TOYOTA JIDOSHA) 19. Dezember 1985

## Beschreibung

Die Erfindung befaßt sich mit einem Verfahren zur Herstellung eines ein- oder mehrteiligen Pleuels mit einem Pleuelauge, Pleuelschaft und einem Pleuelkopf aus wenigstens einem Blechstreifen, der beidseitig mit im wesentlichen senkrecht abgewinkelten Randstegen geformt und normal zu seiner Hauptebene zu zylindrischen oder halbzylindrischen Tragflächen um die Lagerachsen des Pleuelkopfes und/oder des Pleuelauges gebogen wird, wonach alle Blechteile, welche Teilungsfugen in den Tragflächen des Pleuels bilden, in unmittelbarer Nähe der Tragflächen fixiert werden. Die Erfindung befaßt sich weiterhin mit einem aus Blech gefertigten Pleuel, nach dem Oberbegriff des Anspruchs 3.

Pleuel - auch Pleuelstangen genannt - werden heute meist im Schmiedeverfahren hergestellt. Geschmiedete Pleuel besitzen ein relativ hohes Gewicht, was den Massenausgleich des Kurbeltriebs erschwert. Diese Problematik des Massenausgleichs wird dadurch noch gesteigert, daß die Pleuel in ihren Fertiggewichten starken Schwankungen unterliegen, die man dadurch auffängt, daß die Pleuel einzeln gewogen und danach sortiert im Kurbeltrieb montiert werden. Bei der Verwendung einteiliger Kurbelwellen sind Pleuel mit geteilten Pleuelköpfen erforderlich. Dies bedeutet, daß das Schmiedepleuel am Pleuelkopf aufgetrennt und anschließend mit den Schwierigkeiten der genauen Zentrierung wieder montiert werden muß. Insgesamt ist das Schmiedeverfahren für die Pleuelherstellung aufwendig und teuer.

In jüngerer Zeit werden immer mehr Pleuel im Sinterverfahren hergestellt. Dieses Verfahren bietet in der Herstellung selbst zwar keine wesentlichen Kostenvorteile, jedoch sind die damit hergestellten Pleuel leichter und in ihrem Gewicht konstanter als geschmiedete Pleuel. Daher kann der kostenaufwendige Auswiegevorgang entfallen. Zur Teilung des Pleuelkopfes wird dessen untere Hälfte gezielt abgebrochen. Das dabei entstehende dreidimensionale Bruchgefüge dient bei der Montage des Kurbeltriebes als Zentriermittel und ist außerdem in der Lage, axiale und radiale Kräfte zwischen den Hälften des Pleuelkopfes zu übertragen.

Weiterhin sind Titanpleuel bekannt, die zwar mit hervorragenden Festigkeitseigenschaften aufwarten, jedoch in ihrer Herstellung sehr teuer sind. Daher werden sie bevorzugt in Kleinserien für höchste Ansprüche verwendet.

Es sind auch Herstellungsverfahren für Blechpleuel bekannt, bei denen der Blechkörper senkrecht zu den Lagerachsen des Pleuelauges und des Pleuelkopfes liegt und die Formgebung axial zur Lagerachsenrichtung erfolgt, vgl. DE-OS 30 06 240 und DE-OS 38 01 802. Die mit diesem einfachen und billigen Verfahren hergestellten Pleuel sind sehr leicht, besitzen aber keine hohen Steifigkeitswerte. Sie eignen sich daher nur für untergeordnete Verwendungszwecke. Ausführungen mit geteiltem Pleuelkopf für einteilige Kurbelwellen sind zudem schwer zu verwirklichen.

Schließlich ist durch die japanische Patentanmeldungsveröffentlichung JP-A-57173610 (Patent Abstracts of Japan, Vol. 7, No. 16 (M-187)), die dem Oberbegriff des Anspruchs 1 bzw. 3 entspricht, ein aus Blech hergestelltes Pleul bekannt, bei dem ein Blechstreifen mit Randstegen im mittleren Bereich normal zu seiner Hauptebene zu einer zylindrischen Tragfläche um die Lagerachse des Pleuelauges und an den Enden zu einer halbzylindrischen Tragfläche um die Lagerachse des Pleuelkopfes gebogen ist. Bei dieser Formgebung besteht der Pleuelschaft aus einer doppelten Blechlage, so daß sich auch in diesem Fall eine verhältnismäßig große Masse ergibt. Außerdem liegt die Teilungsfuge des Pleuelkopfes normal zur Hauptbelastungsrichtung, was ungünstig ist.

Aufgabe der Erfindung ist es, ein Verfahren der eingangs genannten Art zu schaffen, welches zu einem leichten und gleichzeitig steifen Pleuel führt und gegebenenfalls die Herstellung eines mehrteiligen Pleuels ohne Schwierigkeiten und nachträgliches Auftrennen erlaubt.

Erfindungsgemäß wird die Aufgabe dadurch gelöst, daß ein einziges den Pleuelschaft bildendes Blechteil an seinem einen Ende zylindrisch um die Lagerachse des Pleuelauges und an seinem anderen Ende halbzylindrisch oder zylindrisch um die Lagerachse des Pleuelkopfes gebogen wird.

Ein Pleuel nach der Erfindung ist im Anspruch 3 definiert.

Durch die Kaltformgebung des Pleuels mit Biege- und Tiefziehvorgängen ergibt sich ein schneller, einfacher und energiesparender Herstellungsprozeß. Die damit hergestellten Pleuel sind sehr leicht und unterliegen nur geringen Schwankungen in ihrem Gewicht. Hierdurch wird der Massenausgleich vereinfacht, und es sind nur relativ kleine Gegengewichte an der Kurbelwelle vorzusehen. Der im wesentlichen U-förmige Querschnitt des Pleuels sorgt für eine hohe Biegesteifigkeit. Weiterhin bietet sich der Vorteil, daß eine Teilung des Pleuelkopfes bereits beim Herstellungsverfahren berücksichtigt werden kann und somit ein nachträgliches Auftrennen der Tragflächen entfällt. Um eine gute Passung der Tragflächen zur Aufnahme von Lagerelementen im Pleuelauge und im Pleuelkopf zu erreichen, werden die in den Teilungsfugen der Tragflächen zusammenstoßenden Blechteile mit Zentriermitteln geformt. Weiterhin werden diese Blechteile ggf. nach einer Wärmebehandlung des Pleuels vorläufig fixiert und die Tragflächen feinbearbeitet.

Die Fixierung der Blechteile kann mit Schrauben-, Füge- oder Klemmenverbindungen erfolgen, wobei die Verbindung des geteilten Pleuelkopfes nach der Feinbearbeitung wieder gelöst werden muß, um das Pleuel auf dem Lagerzapfen der Kurbelwelle endgültig zu montieren. Die zwischen den Tragflächen und dem Kurbelzapfen anzuordnenden Lagerhalbschalen werden dabei mit an ihnen angeformten Haltenasen in den Teilungsfugen verankert. Im Pleuelauge wird eine Lagerbuchse eingespannt, die den Kolbenbolzen aufnimmt.

Kommen Schraubenverbindungen zum Einsatz, sind vorzugsweise zwischen Schraubenkopf und Pleuel und/oder zwischen Mutter und Pleuel jeweils Abstandhalter vorgesehen, so daß lange Schrauben zum Verspannen der Blechteile einsetzbar sind.

Gegenüber kurzen Schrauber haben lange bei schwingungs- und stoßbelasteten Schraubenverbindungen den Vorteil, daß sie auch in vorgespanntem Zustand ein höheres Formänderunsvermögen besitzen und so in der Lage sind, Spannungsspitzen durch elastische Verformung abzubauen, wodurch sich die Belastung des Schraubenschaftes reduziert.

Diese Schrauben können auch als Dehnschrauben ausgeführt sein, da herkömmliche Starrschrauben mit durchgängigem Gewinde am Übergang zwischen Schraubenkopf und erstem Gewindegang ein ungünstiges Kerbverhalten besitzen. Dehnschrauben, die aufgrund ihrer besonderen Schaftausbildung auch in ihrem Formänderungsvermögen herkömmlichen Schrauben überlegen sind, weisen in den kritischen Schaftquerschnitten niedrigere Kerbzahlen auf und sind wegen der daraus resultierenden günstigeren Spannungsverteilungs insbesondere bei schwingenden Lastfällen, wie sie in den Verbindungen des Pleuels vorliegen, höher beanspruchbar.

Die Randstege des Blechstreifens können, falls Bauraumbeschränkungen dies erforderlich machen, abgeflacht oder stellenweise völlig entfernt werden. Dies geschieht zweckmäßigserweise vor dem Biegevorgang des Blechstreifens, da dieser hierdurch vereinfacht wird.

Sollte es im Bereich des Pleuelschaftes zu Schwingungen der Randstege kommen, sind zwischen ihnen Schwingungsdämpfer vorzusehen.

Als Werkstoff für die Pleuelteile kommen Stählemit relative hohem Formänderungsvermögen in Betracht, die entweder durch ihre mikrolegierte Feinkornstruktur oder durch die Möglichkeit eines Vergütungsverfahrens nach der Blechumformung eine hohe Festigkeit besitzen. Da auch die nach dem oben beschriebenen Verfahren und seinen Abwandlungen hergestellten Pleul Gegenstand der Erfindung sind, werden im Folgenden drei Ausführungsbeispiele von erfindungsgemäßen Pleueln vorgestellt. Es zeigen:
- Fig. 1: ein Pleuel aus zwei Blechstreifen mit geteilten Pleuelkopf;
- Fig. 2: ein Pleuel nach Fig. 1 mit Abstandhaltern und langen Spannschrauben;
- Fig. 3: einen Längsschnitt des Pleuels nach Fig. 2.

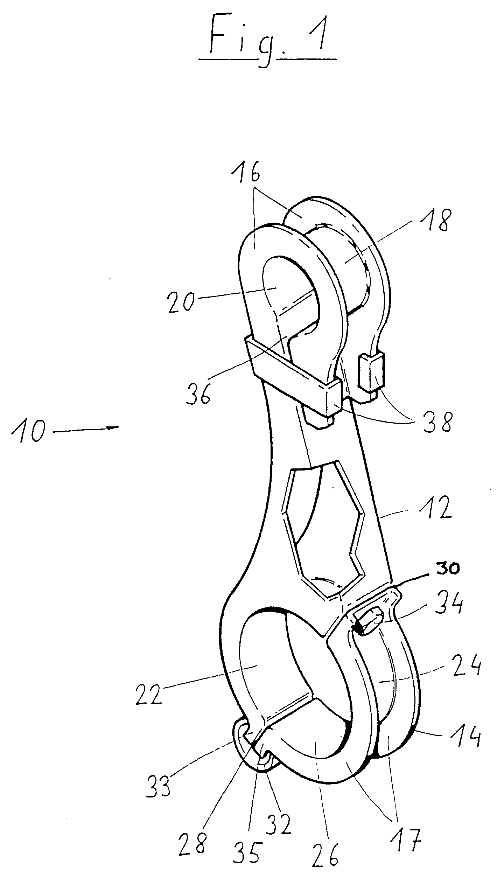

Ein in Fig. 1 dargestelltes Pleuel 10 besteht aus zwei Blechteilen 12, 14 mit senkrecht abgewinkelten Randstegen 16, 17. Der obere Blechstreifen 12 wurde normal zu seiner Hauptebene 18 an seinem einen Ende zu einer zylindrischen Tragfläche 20 um die Lagerachse des Pleuelauges und an seinem anderen Ende zu einer halbzylindrischen Tragfläche 22 um die Lagerachse des Pleuelkopfes gebogen. Ein zeichnerischer Ausbruch im Pleuelschaft verdeutlicht die Struktur des Blechpleuels 10 in U-Form.

Das untere Blechteil 14 wurde normal zu seiner Hauptebene 24 zu einem Pleuellagerdeckel mit einer halbzylindrischen Tragfläche 26 geformt. Bedingt durch die Teilung treten zwischen den Tragflächen 22, 26 des oberen Blechteils 12 und des unteren Blechteils 14 Teilungsfugen 28, 30 auf. Im Bereich der Teilungsfugen 28, 30 sind die Blechteile 12, 14 mit zu den Tragflächen 22, 26 radial liegenden Befestigungsflächen versehen. Die eigentliche Befestigung erfolgt im Bereich der unteren Teilungsfuge 28 über eine Klammer 32, welche die als Befestigungslaschen angeformten Enden 33, 35 der Blechteile 12, 14 zusammenpreßt. An der oberen Teilungsfuge 30 des Pleuelkopfes erfolgt die Verspannung der beiden Blechteile mit Hilfe einer Schraube 34 und einer (nicht gezeigten) Mutter.

Da die Tragfläche 20 des Pleuelauges ebenfalls eine Trennfuge 36 aufweist, ist auch hier eine Befestigung der sie begrenzenden Blechstücke notwendig. In der in Fig. 1 gezeigten Ausführungsform werden hierbei auf die Randstege 16 des oberen Blechteils 12 Klammern 38 so aufgesetzt, daß sie ein Aufbiegen des Pleuelauges verhindern. Die Randstege können zu diesem Zweck mit einer Zahnung, Riffelung oder Vorsprüngen versehen sein, um eine Verkrallung mit den Klammern 38 zu gewährleisten.

Um die Steifigkeit an den Trennfugen 28, 30 und 36 zu fördern, sind die Verbindungselemente 32, 34, 38 in Tragflächennähe angeordnet.

Aufgrund des geteilten Pleuelkopfes eignet sich das Pleuel 10 für einteilige Kurbelwellen.

Eine nicht dargestellte einteilige Ausführungsform des Pleuels 10 eignet sich insbesondere für Kurbelwellen mit frei zugänglichen Lagerzapfen.

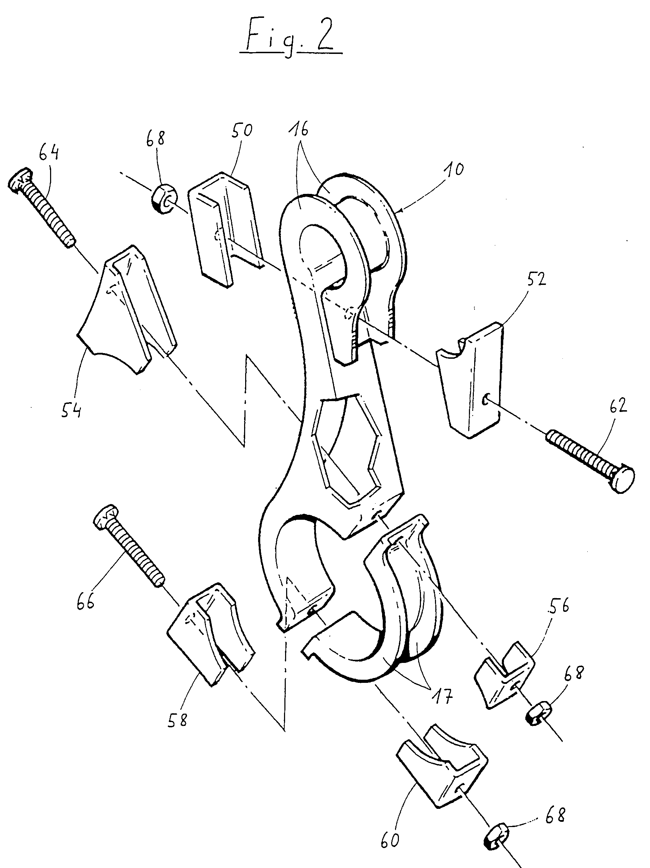

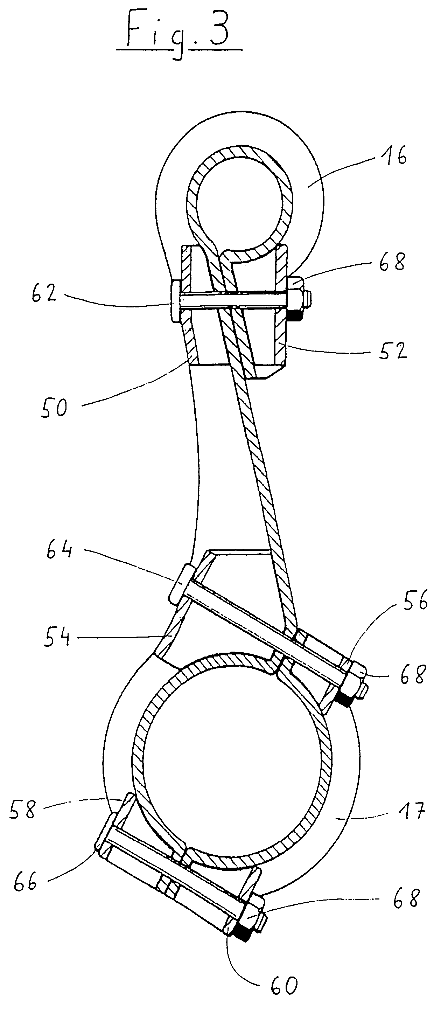

Fig. 2 zeigt das Pleuel 10 nach Fig. 1 mit Abstandhaltern 50, 52, 54, 56, 58, 60, die den Einsatz langer Spannschrauben 62, 64, 66 ermöglichen. Die Abstandhalter sind im wesentlichen als U-förmige Blechwinkel ausgebildet, wobei die Kanten der seitlichen Stege der Blechwinkel passend zur jeweiligen Einbaulage so ausgeformt sind, daß sie in ihrer vollen Länge auf dem Pleuelkörper aufliegen und die als Auflage der Schraubenköpfe bzw. zugehöriger Muttern 68 vorgesehenen Grundflächen zweier jeweils gegenüberliegender Blechwinkel in montiertem Zustand flächenparallel sind. Diese Geometrie ist aus Fig. 3 ersichtlich. Die Bohrungen in den Grundflächen der Blechwinkel müssen zudem mit den zugehörigen Bohrungen im Körper des Pleuels fluchten, damit die Schrauben beim Einbau nicht verkanten.

Die Anordnung der Blechwinkel zwischen den Stützstegen 16, 17 des Pleuels 10 verleiht diesem zusätzliche Stabilität. Weiterhin wirken die Blechwinkel als Schwingungsdämpfer für die Randstege 16, 17, wodurch sich Vorteile für die Dauerfestigkeit und das akustische Verhalten des Pleuls 10 ergeben.

Um die Festigkeitseigenschaften der Schraubenverbindungen zusätzlich zu verbessern, können statt der dargestellten Starrschrauben mit durchgängigem Gewinde Dehnschrauben mit spezi_ ell ausgeformtem Dehnschaft zum Einsatz kommen.

## Patentansprüche

1. Verfahren zur Herstellung eines ein- oder mehrteiligen Pleuels (10) mit einem Pleuelauge, Pleuelschaft und einem Pleuelkopf aus wenigstens einem Blechstreifen, der beidseitig mit im wesentlichen senkrecht abgewinkelten Randstegen (16, 17) geformt und normal zu seiner Hauptebene (18, 24) zu zylindrischen oder halbzylindrischen Tragflächen (20, 22, 26) um die Lagerachsen des Pleuelkopfes und/oder des Pleuelauges gebogen wird, wonach alle Blechteile, welche Teilungsfugen (28, 30, 36) in den Tragflächen des Pleuels (10) bilden, in unmittelbarer Nähe der Tragflächen fixiert werden, **dadurch gekennzeichnet,** daß ein einziges den Pleuelschaft bildendes Blechteil an seinem einen Ende zylindrisch um die Lagerachse des Pleuelauges und an seinem anderen Ende halbzylindrisch oder zylindrisch um die Lagerachse des Pleuelkopfes gebogen wird.

2. Verfahren nach Anspruch 1, **dadurch gekennzeichnet**, daß nach dem Formen und ggf. einer Wärmebehandlung die die Teilungsfugen (28, 30, 36) der Tragflächen (20, 22, 26) bildenden Blechteile vorläufig fixiert und die Tragflächen feinbearbeitet werden.

3. Nach einem Verfahren nach Anspruch 1 hergestelltes Pleuel (10) aus Blech mit einem Pleuelschaft, einem Pleuelauge und einem Pleuelkopf, das aus wenigstens einem in seiner Hauptebene (18, 24) parallel zu den Lagerachsen des Pleuelauges und -kopfes liegenden Blechteil mit beidseitig senkrecht abgewinkelten Randstegen besteht und alle Blechteile, welche Teilungsfugen (28, 30, 36) in den Tragflächen (20, 22, 26) des Pleuels (10) bilden, in unmittelbarer Nähe der Tragflächen (20, 22, 26) fixierbar sind, **dadurch gekennzeichnet,** daß ein einziges den Pleuelschaft bildendes Blechteil an seinem einen Ende zylindrisch um die Lagerachse des Pleuelauges und an seinem anderen Ende halbzylindrisch oder zylindrisch um die Lagerachse des Pleuelkopfes gebogen ist.

4. Pleuel nach Anspruch 3, **dadurch gekennzeichnet**, daß der Pleuelkopf geteilt ist und der Pleuellagerdeckel aus einem zweiten Blechstreifen (14) mit im wesentlichen senkrecht abgewinkelten Randstegen (17) besteht, der halbzylindrisch um die Lagerachse des Pleuelkopfes gebogen ist.

5. Pleuel nach Anspruch 4, **dadurch gekennzeichnet,** daß die Teilungsfugen (28) des Pleuelkopfes zur Längsrichtung des Pleuelschafts geneigt sind.

6. Pleuel nach Anspruch 3, **dadurch gekennzeichnet,** daß die Enden der Blechteile (12, 14) als Befestigungslaschen ausgeformt sind.

7. Pleuel nach Anspruch 3, **dadurch gekennzeichnet,** daß im Pleuelauge eine Lagerbuchse und/oder im Pleuelkopf innerhalb der Tragflächen (20, 22, 26) Lagerschalenhälften angeordnet sind.

8. Pleuel nach Anspruch 3, **dadurch gekennzeichnet,** daß die Blechteile durch Schrauben (34, 62, 64, 66) und Muttern (68) miteinander verschraubt sind.

9. Pleuel nach Anspruch 8, **dadurch gekennzeichnet,** daß zwischen Schraubenkopf und Pleuel (10) und/oder zwischen Mutter (68) und Pleuel (10) jeweils Abstandhalter (50, 52, 54, 56, 58, 60) vorgesehen sind.

10. Pleuel nach Anspruch 3, **dadurch gekennzeichnet,** daß die Blechteile mit Klammern (32, 38) verbunden sind, die an den Befestigungslaschen (33, 35) oder an den Randstegen (16) der Blechteile (12, 14) angesetzt sind.

## Claims

1. A method of producing a one-piece or multipart connecting rod (10) with a connecting-rod eye, a connecting-rod shank and a connecting-rod big-end from at least one sheet-metal strip, which is formed on both sides with peripheral webs (16,17), which are bent substantially perpendicularly, and which is bent normal to its principal plane (18,24) to form cylindrical or semicylindrical bearing surfaces (20,22,26) about the bearing axes of the connecting-rod big-end and/or of the connecting-rod eye, after which all the sheet-metal parts which form dividing joints (28,30,36) in the bearing surfaces of the connecting rod (10) are secured in the immediate vicinity of the bearing surfaces, characterised in that at one end a single sheet-metal part forming the connecting-rod shank is bent cylindrically about the bearing axis of the connecting-rod eye and at its other end is bent semicylindrically or cylindrically about the bearing axis of the connecting-rod big-end.

2. A method according to Claim 1, characterised in that, after the forming operation and, optionally, heat treatment, the sheet-metal parts forming the dividing joints (28,30,36) of the bearing surfaces (20,22,26) are temporarily secured and the bearing surfaces are finish-machined.

3. A connecting rod produced from sheet metal in accordance with the method of Claim 1, with a connecting-rod shank, a connecting-rod eye and a connecting-rod big-end, which comprises at least one sheet-metal part which in its principal plane (18,24) is disposed parallel to the bearing axes of the connecting-rod eye and connecting-rod big-end and which has peripheral webs which on both sides are bent perpendicularly, and all the sheet-metal parts which form dividing joints (28,30,36) in the bearing surfaces (20,22,26) of the connecting rod (10) can be secured in the immediate vicinity of the bearing surfaces (20,22,26), characterised in that at one end a single sheet-metal part forming the connecting-rod shank is bent cylindrically about the bearing axis of the connecting-rod eye and at its other end is bent semicylindrically or cylindrically about the bearing axis of the connecting-rod big-end.

4. A connecting rod according to Claim 3, characterised in that the connecting-rod big-end is divided and the connecting-rod bearing cover comprises a second sheet-metal strip (14) with peripheral webs (17) bent substantially perpendicularly, which is bent semi-cylindrically about the bearing axis of the connecting-rod big-end.

5. A connecting rod according to Claim 4, characterised in that the dividing joints (28) of the connecting-rod big-end are inclined relative to the longitudinal direction of the connecting-rod shank.

6. A connecting rod according to Claim 3, characterised in that the ends of the sheet-metal parts (12,14) are formed as fastening plates.

7. A connecting rod according to Claim 3, characterised in that a bearing bush is provided in the connecting-rod eye and/or in the connecting-rod big-end bearing shell halves are provided inside the bearing surfaces (20,22,26).

8. A connecting rod according to Claim 3, characterised in that the sheet-metal parts are screwed together with bolts (34,62,64,66) and nuts (68).

9. A connecting rod according to Claim 8, characterised in that spacers (50,52,54,56,58,60) are provided respectively between the screw head and the connecting rod (10) and/or between the nut (68) and the connecting rod (10).

10. A connecting rod according to Claim 3, characterised in that the sheet-metal parts are joined by clips (32,38) which are fitted to fastening plates (33,35) or to the peripheral webs (16) of the sheet-metal parts (12,14).

## Revendications

1. Procédé de fabrication d'une bielle (10) en une ou plusieurs parties, comprenant un pied, un corps et une tête de bielle, à partir d'une bande de tôle façonnée des deux côtés de manière à présenter deux barrettes latérales (16, 17) coudées à angle droit, puis pliée perpendiculairement à son plan principal (18, 24) de manière à former des portées cylindriques ou demi-cylindriques (20, 22, 26) entourant les axes des paliers de la tête et/ou du pied de bielle, à la suite de quoi toutes les pièces de tôle délimitant des joints de séparation (28, 30, 36) dans les portées de la bielle (10), sont fixées à proximité directe des portées,
caractérisé en ce que
la pièce de tôle unique formant le corps de bielle est cintrée à une de ses extrémités selon un cylindre autour de l'axe du palier du pied de bielle et à l'autre extrémité selon un cylindre ou un demi-cylindre autour de l'axe du palier de la tête de bielle.

2. Procédé de fabrication selon la revendication 1,
caractérisé en ce qu'
après formage et éventuellement traitement thermique, les pièces de tôle délimitant les joints de séparation (28, 30, 36) des portées (20, 22, 26) sont fixées provisoirement et les portées usinées finement.

3. Bielle (10) fabriquée à partir d'une tôle par le procédé de la revendication 1 et comportant un pied, un corps et une tête de bielle, cette bielle étant composée d'une pièce de tôle dont le plan principal (18, 24) est parallèle aux axes des paliers du pied et de la tête de bielle et présente des deux côtés des barrettes marginales coudées à angle droit, toutes les pièces de tôle délimitant les joints de séparation (28, 30, 36) situés dans les portées (20, 22, 26) de la bielle (10) pouvant être fixées à proximité directe des portées,
caractérisée en ce que
la pièce de tôle unique formant le corps de bielle est cintrée à une de ses extrémités selon un cylindre autour de l'axe du palier du pied de bielle et à son autre extrémité selon un cylindre ou un demi-cylindre autour de l'axe du palier de la tête de bielle.

4. Bielle selon la revendication 3,
caractérisée en ce que
la tête de bielle est divisée, le couvercle de palier correspondant étant constitué d'une deuxième bande de tôle (14) à barrettes marginales (17) coudées sensiblement à angle droit, cintrée en demi-cylindre autour de l'axe du palier de tête de bielle.

5. Bielle selon la revendication 4,
caractérisée en ce que
les joints de séparation (28) de la tête de bielle sont inclinés par rapport à la direction longitudinale du corps de bielle.

6. Bielle selon la revendication 3,
caractérisée en ce que
les extrémités des pièces de tôle (12, 14) sont conformées en tant que pattes de fixation.

7. Bielle selon la revendication 3,
caractérisée en ce que
dans le pied de bielle est montée une douille de palier et/ou dans la tête de bielle sont montées dans les portées (20, 22, 26) des demies coquilles de palier.

8. Bielle selon la revendication 3,
caractérisée en ce que
les pièces de tôle sont reliées entre elles par des vis (34, 62, 64, 66) et des écrous (68).

9. Bielle selon la revendication 8,
caractérisée en ce qu'
il est prévu chaque fois des pièces d'espacement (50, 52, 54, 56, 58, 60) entre les têtes de vis et la bielle (10) et/ou entre les écrous (68) et la bielle (10).

10. Bielle selon la revendication 3,
caractérisée en ce que
les pièces de tôles sont reliées par des pinces (32, 38) emmanchées sur les pattes de fixation (33, 35) ou sur les barrettes marginales (16) des pièces de tôle (12, 14).
